# EUROPEAN PATENT APPLICATION

(11) **EP 4 145 571 A1**
(43) Date of publication of application: **08.03.2023**
(21) Application number: 21797567.1
(22) Date of filing: 27.04.2021
(51) Int. Cl.: H01M 8/0206, H01M 8/0228, H01M 8/0247, H01M 8/0258, H01M 8/04, H01M 8/12, H01M 8/1226, H01M 8/2432, H01M 8/2475

(54) **CELL, CELL STACK DEVICE, MODULE, AND MODULE ACCOMMODATING DEVICE**

(30) Priority: 30.04.2020 JP 2020080855
(71) Applicant: Kyocera Corporation, Kyoto-shi Kyoto 612-8501 (JP)
(72) Inventor: SENO, Hiroaki, Kyoto-shi, Kyoto 612-8501 (JP); FUJIMOTO, Tetsuro, Kyoto-shi, Kyoto 612-8501 (JP)
(74) Representative: Viering, Jentschura & Partner mbB Patent- und Rechtsanwälte
(86) International application number: PCT/JP2021/016845
(87) International publication number: WO 2021/221071

(57) **Abstract**

A cell includes an element portion and a metal member. The metal member includes a first gas-flow passage and a second gas-flow passage, and supports the element portion. First gas flows through the first gas-flow passage. Second gas flows through the second gas-flow passage.

## Description

### TECHNICAL FIELD

The present disclosure relates to a cell, a cell stack device, a module, and a module housing device.

### BACKGROUND OF INVENTION

In recent years, various fuel cell stack devices each including a plurality of fuel cells have been proposed as next-generation energy. The plurality of fuel cells each are a type of cell capable of obtaining electrical power, by using a fuel gas (hydrogen-containing gas) such as a hydrogen-containing gas and an oxygen-containing gas such as air.

### CITATION LIST

### PATENT LITERATURE

Patent Document 1: JP 2016-195029 A

### SUMMARY

In an aspect of an embodiment, a cell includes an element portion and a metal member. The metal member includes a first gas-flow passage and a second gas-flow passage, and supports the element portion. First gas flows through the first gas-flow passage. Second gas flows through the second gas-flow passage.

Also, a cell stack device of the present disclosure includes a cell stack including a plurality of the cells mentioned above.

Also, a module of the present disclosure includes the cell stack device mentioned above and a housing container that houses the cell stack device.

Also, a module housing device of the present disclosure includes the module mentioned above, an auxiliary device for operating the module, and an external case that houses the module and the auxiliary device.

### BRIEF DESCRIPTION OF DRAWINGS

FIG. 1A is a cross-sectional view illustrating an example of a cell according to an embodiment.
FIG. 1B is a side view of an example of an element portion included in the cell according to the embodiment as viewed from an air electrode side.
FIG. 1C is a side view of the example of the element portion included in the cell according to the embodiment as viewed from a fuel electrode side.
FIG. 2A is a perspective view illustrating an example of a cell stack device according to the embodiment.
FIG. 2B is a cross-sectional view taken along the line X-X illustrated in FIG. 2A.
FIG. 2C is a top view illustrating the example of the cell stack device according to the embodiment.
FIG. 3A is an enlarged cross-sectional view of a region A illustrated in FIG. 1A.
FIG. 3B is a cross-sectional view illustrating another example of the region A illustrated in FIG. 1A.
FIG. 4A is a cross-sectional view illustrating an example of a cell according to a first variation of the embodiment.
FIG. 4B is a developed view illustrating an example of a structure according to an embodiment.
FIG. 4C is a developed view illustrating another example of the structure according to the embodiment.
FIG. 5A is a cross-sectional view illustrating an example of a cell according to a second variation of the embodiment.
FIG. 5B is a perspective view illustrating an example of a second channel plate according to a variation.
FIG. 6A is a perspective view illustrating another example of the second channel plate.
FIG. 6B is a perspective view illustrating another example of the second channel plate.
FIG. 6C is a perspective view illustrating another example of the second channel plate.
FIG. 6D is a perspective view illustrating another example of the second channel plate.
FIG. 7 is an exterior perspective view illustrating an example of a module according to an embodiment.
FIG. 8 is an exploded perspective view schematically illustrating an example of a module housing device according to an embodiment.

### DESCRIPTION OF EMBODIMENTS

Hereinafter, embodiments of a cell, a cell stack device, a module, and a module housing device disclosed in the present application will be described with reference to the accompanying drawings. The disclosure is not limited by the following embodiment.

Note, further, that the drawings are schematic and that the dimensional relationships between elements, the proportions thereof, and the like may differ from the actual ones. There may be differences between the drawings in the dimensional relationships, proportions, and the like.

### Configuration of Cell

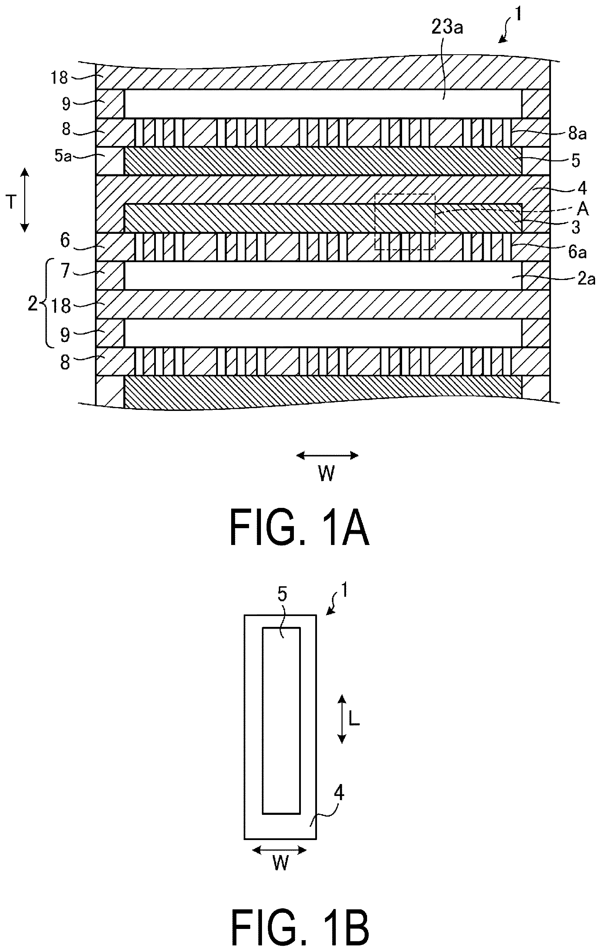

First, with reference to FIGs. 1A to 1C, an example of a solid oxide type fuel cell will be described as a cell according to an embodiment.

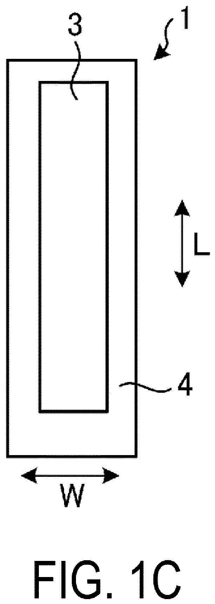

FIG. 1A is a cross-sectional view illustrating an example of a cell 1 according to an embodiment, FIG. 1B is a side view of an example of an element portion included in the cell 1 according to the embodiment as viewed from an air electrode 5 side. FIG. 1C is a side view of the example of the element portion included in the cell 1 according to the embodiment as viewed from a fuel electrode 3 side. Note that FIGs. 1A to 1C each illustrate an enlarged portion of a configuration of the cell 1.

In the example illustrated in FIGs. 1A to 1C, the cell 1 is hollow and flat plate-shaped. As illustrated in FIG. 1B, the overall shape of the cell 1 when viewed from the side is, for example, a rectangle having a side length of from 5 cm to 50 cm in a length direction L and a length of from 1 cm to 10 cm in a width direction W orthogonal to the length direction L. The thickness in a thickness direction T of the entire cell 1 is, for example, from 1 mm to 5 mm.

As illustrated in FIG. 1A, the cell 1 includes an element portion, a first member 6, a second member 8, and a channel member 2. The first member 6, the channel member 2, and the second member 8 have a stacked structure in which a plurality of members made of metal are stacked up in the thickness direction T. The first member 6, the channel member 2, and the second member 8 are examples of the metal member.

The element portion is located on one surface side of the first member 6. The element portion includes a fuel electrode 3, a solid electrolyte layer 4, and an air electrode 5.

As illustrated in FIGs. 1B and 1C, the air electrode 5 and the fuel electrode 3 extend neither to the lower end nor the upper end of the cell 1. At a lower end portion of the cell 1, only the solid electrolyte layer 4 is exposed to the surface. Note that as illustrated in FIG. 1A, the solid electrolyte layer 4 is located on an end surface in the width direction W and the length direction L of the fuel electrode 3. Since the solid electrolyte layer 4 is located on the end surface of the fuel electrode 3, the leakage of the fuel gas and the oxygen-containing gas is less likely to occur. Note that instead of the solid electrolyte layer 4, a material having gas blocking properties may be positioned on the end surface of the fuel electrode 3. The material having gas blocking properties may be, for example, glass.

Hereinafter, each of constituent members constituting the cell 1 will be described.

One surface of the first member 6 supports the fuel electrode 3, and the other surface on the opposite side to that of the one surface of the first member 6 faces a first gas-flow passage 2a. The first gas-flow passage 2a includes an inlet and an outlet for the fuel gas at an end portion in the length direction L of the cell 1. The fuel gas supplied to the inlet of the first gas-flow passage 2a flows through the first gas-flow passage 2a, and is discharged from the outlet of the first gas-flow passage 2a to the outside of the cell 1. In this case, the first direction directed from the inlet toward the outlet of the first gas-flow passage 2a is the length direction L of the cell 1. The first member 6 includes openings 6a that penetrate from the one surface to the other surface. The first member 6 has gas permeability. For example, the first member 6 can transmit the fuel gas through the openings 6a.

One surface of the second member 8 supports the air electrode 5, and the other surface faces a second gas-flow passage 23a. The second member 8 includes openings 8a that penetrate from the one surface to the other surface. The second member 8 has gas permeability. For example, the second member 8 can transmit the oxygen-containing gas through the openings 8a.

The channel member 2 includes a first channel plate 7, a second channel plate 9, and a partition member 18.

One surface of the first channel plate 7 faces the first member 6, and the other surface on the opposite side to that of the one surface of the first channel plate 7 faces the partition member 18. The first channel plate 7 includes the first gas-flow passage 2a through which the fuel gas flows. The first gas-flow passage 2a is in communication with the openings 6a. The fuel gas flowing through the first gas-flow passage 2a is supplied to the fuel electrode 3 through the openings 6a.

One surface of the second channel plate 9 faces the second member 8, and the other surface on the opposite side to that of the one surface of the second channel plate 9 faces the partition member 18. The second channel plate 9 includes the second gas-flow passage 23a through which the oxygen-containing gas flows. The second gas-flow passage 23a is in communication with the openings 8a. The oxygen-containing gas flowing through the second gas-flow passage 23a is supplied to the air electrode 5 through the openings 8a.

The partition member 18 is located between the first channel plate 7 and the second channel plate 9. The partition member 18 hermetically seals the first gas-flow passage 2a and the second gas-flow passage 23a, respectively. The partition member 18 has gas blocking properties. For example, the partition member 18 transmits neither the fuel gas flowing through the first gas-flow passage 2a nor the oxygen-containing gas flowing through the second gas-flow passage 23a. The partition member 18 also serves as an electrically conductive member for electrically connecting adjacent cells 1 in series.

The material of the metal members (the first member 6, the channel member 2, and the second member 8) may be, for example, stainless steel. The metal members may contain, for example, a metal oxide.

A coating film may be positioned on the portion exposed to an oxidizing atmosphere (e.g., the second member 8, the second channel plate 9, and the one surface side of the partition member 18) of the metal members (the first member 6, the channel member 2, and the second member 8). For example, the cell 1 may include a coating layer that is located between a metal member and the oxidizing atmosphere and that contains at least any one of zinc, manganese, and cobalt.

As a result, the chromium (Cr) contained in the metal material of the metal member is less likely to be released into the oxidizing atmosphere during high-temperature operation. Therefore, according to the embodiment, the metal members can have enhanced durability, and thus the cell 1 can have enhanced durability.

A coating film may be positioned on the portion exposed to a reducing atmosphere (e.g., the first member 6, the first channel plate 7, and the other surface side of the partition member 18) of the metal members. For example, the cell 1 may include a coating layer that is located between a metal member and the reducing atmosphere and that contains CeO₂.

As a result, the constituent elements are less likely to be released from the portion exposed to the reducing atmosphere of the metal member. Therefore, according to the embodiment, the metal members can have enhanced durability, and thus the cell 1 can have enhanced durability.

As the material of the fuel electrode 3, a commonly known material may be used. As the material of the fuel electrode 3, a porous conductive ceramic, for example, or a ceramic containing ZrO₂ in which calcium oxide, magnesium oxide, or a rare earth element oxide is contained as a solid solution, and Ni and/or NiO may be used. As the rare earth element oxide, for example, Y₂O₃ or the like is used. Hereinafter, ZrO₂ in which calcium oxide, magnesium oxide, or a rare earth element oxide is contained as a solid solution may be referred to as stabilized zirconia. The stabilized zirconia also includes partially stabilized zirconia.

The solid electrolyte layer 4 is an electrolyte and bridges ions between the fuel electrode 3 and the air electrode 5. At the same time, the solid electrolyte layer 4 has gas blocking properties, and makes leakage of the fuel gas and the oxygen-containing gas less likely to occur.

The material of the solid electrolyte layer 4 may be, for example, ZrO₂ in which 3 mol% to 15 mol% of a rare earth element oxide is contained as a solid solution. As the rare earth element oxide, for example, Y₂O₃ or the like is used. Note that another material may be used as the material of the solid electrolyte layer 4, as long as the material has the aforementioned characteristics.

The material of the air electrode 5 is not particularly limited, as long as the material is commonly used for an air electrode. The material of the air electrode 5 may be, for example, a conductive ceramic such as an ABO₃ type perovskite oxide.

The material of the air electrode 5 may be, for example, a composite oxide in which Sr and La coexist in an A site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

Further, the air electrode 5 has gas permeability. The open porosity of the air electrode 5 may be, for example, 20% or more, and particularly may be in a range from 30% to 50%.

A sealing portion 5a may be located around the air electrode 5. The sealing portion 5a is located between the solid electrolyte layer 4 and the second member 8. The sealing portion 5a seals the flow of the oxygen-containing gas between the air electrode 5 and the outside. The sealing portion 5a may be, for example, glass, or may be a metal member.

### Configuration of Cell Stack Device

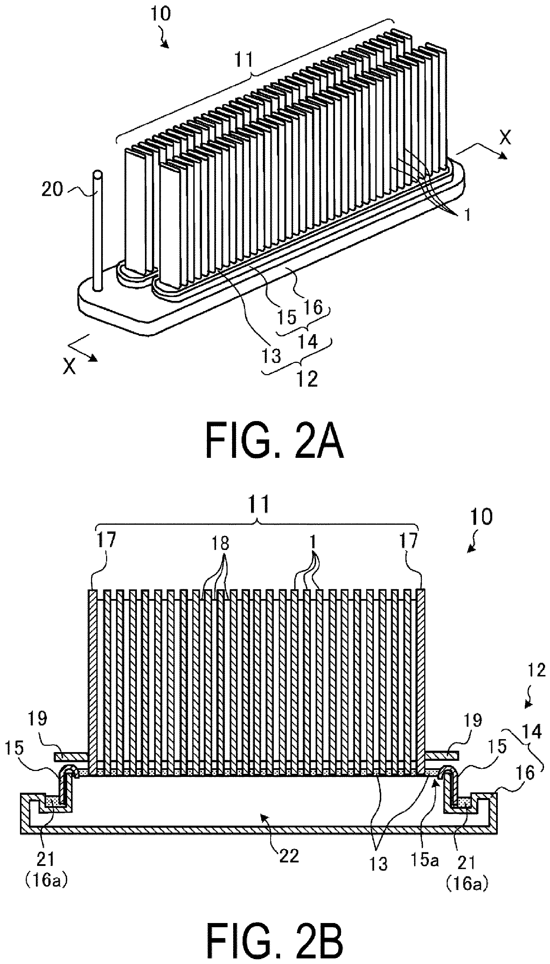

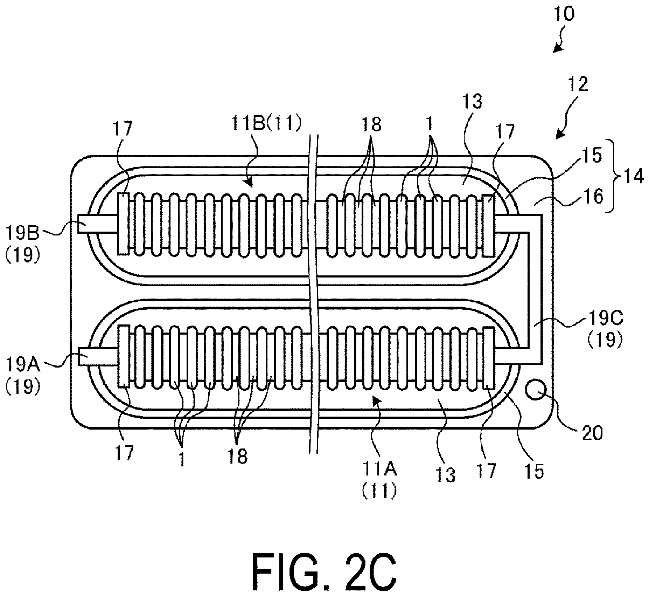

Next, a cell stack device 10 according to the present embodiment using the cell 1 described above will be described with reference to FIGs. 2A to 2C. FIG. 2A is a perspective view illustrating an example of the cell stack device 10 according to the embodiment. FIG. 2B is a cross-sectional view taken along the line X-X illustrated in FIG. 2A. FIG. 2C is a top view illustrating the example of the cell stack device 10 according to the embodiment.

As illustrated in FIG. 2A, the cell stack device 10 includes a cell stack 11 that includes a plurality of the cells 1 arrayed (stacked) in the thickness direction T (see FIG. 1A) of the cell 1, and a fixing member 12.

The fixing member 12 includes a bonding material 13 and a support member 14. The support member 14 supports the cells 1. The bonding material 13 bonds the cells 1 with the support member 14. Further, the support member 14 includes a support body 15 and a gas tank 16. The support body 15 and the gas tank 16, constituting the support member 14, are made of metal and are electrically conductive.

As illustrated in FIG. 2B, the support body 15 includes an insertion hole 15a into which the lower end portion of the plurality of cells 1 are inserted. The lower end portion of the plurality of cells 1 and an inner wall of the insertion hole 15a are bonded by the bonding material 13.

The gas tank 16 includes an opening portion through which the fuel gas is supplied to the plurality of cells 1 via the insertion hole 15a, and a recessed groove 16a located in the periphery of the opening portion. An outer peripheral end portion of the support body 15 is fixed to the gas tank 16 by a fixing material 21 filled in the recessed groove 16a of the gas tank 16.

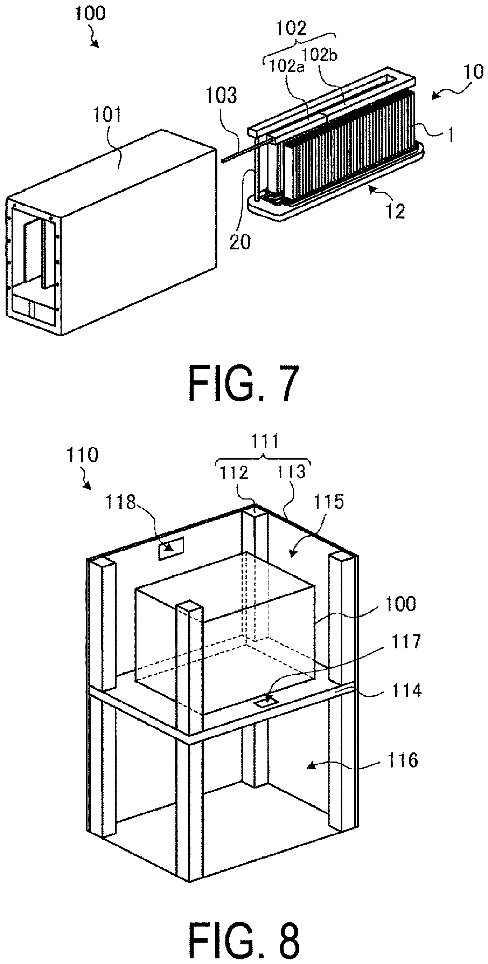

In the example illustrated in FIG. 2A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through this gas circulation pipe 20, and is supplied from the gas tank 16 to the first gas-flow passage 2a (see FIG. 1A) inside the cells 1. The fuel gas supplied to the gas tank 16 is produced by a reformer 102 (see FIG. 7), which will be described later.

A hydrogen-rich fuel gas can be produced, for example, by steam reforming a raw fuel. When the fuel gas is produced by the steam reforming, the fuel gas contains steam.

In the example illustrated in FIG. 2A, the cell stack 11 including a plurality of cells 1 includes two rows of cell stacks 11, two support bodies 15, and the gas tank 16. Two rows of the cell stacks 11 each have a plurality of cells 1. Each of the cell stacks 11 is fixed to a corresponding one of the support bodies 15. The gas tank 16 includes two through holes in an upper surface thereof. Each of the support bodies 15 is disposed in a corresponding one of the through holes. The internal space 22 is formed by the single gas tank 16 and the two support bodies 15.

The insertion hole 15a has, for example, an oval shape in a top surface view. The length of the insertion hole 15a, for example, in an array direction of the cells 1, that is, the thickness direction T thereof, is greater than the distance between two end current collectors 17 located at two ends of the cell stack 11. The width of the insertion hole 15a is, for example, greater than the length of the cell 1 in the width direction W (see FIG. 1A). Note that the shape of the insertion hole 15a may be substantially rectangular long in the array direction of the cells 1.

As illustrated in FIG. 2B, the bonding material 13 is filled and solidified in a bonding portion between the inner wall of the insertion hole 15a and the lower end portion of the cells 1. As a result, the inner wall of the insertion hole 15a and the lower end portion of the plurality of cells 1 are bonded and fixed, and the lower end portions of the cells 1 are bonded and fixed to each other. The first gas-flow passage 2a of each of the cells 1 is in communication with the internal space 22 of the support member 14 at the lower end portion of the first gas-flow passage 2a.

As the bonding material 13 and the fixing material 21, a material having a low conductivity such as glass can be used. As a specific material of the bonding material 13 and the fixing material 21, an amorphous glass or the like may be used, or particularly, a crystallized glass or the like may be used.

As the crystallized glass, for example, any one of SiO₂-CaO-based, MgO-B₂O₃-based, La₂O₃-B₂O₃-MgO-based, La₂O₃-B₂O₃-ZnO-based, and SiC₂-CaO-ZnO materials may be used. In particular, an SiO₂-MgO-based material may be used.

As illustrated in FIG. 2B, the partition member 18, which is an electrically conductive member, is interposed between adjacent cells 1 of the plurality of cells 1.

Further, as illustrated in FIG. 2B, the end current collectors 17 are electrically connected to the cells 1 located at the outermost sides in the array direction of the plurality of cells 1. The end current collectors 17 are each connected to an electrically conductive portion 19 protruding outward from the cell stack 11. The electrically conductive portion 19 collects electricity generated by the cells 1, and conducts the electricity to the outside. Note that in FIG. 2A, the end current collectors 17 are not illustrated.

Further, as illustrated in FIG. 2C, in the cell stack device 10, two cell stacks 11A and 11B, which are connected in series, function as one battery. Thus, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside, and is electrically connected to the end current collector 17 on a positive electrode side in the cell stack 11A. The negative electrode terminal 19B functions as a negative electrode when the electrical power generated by the cell stack 11 is output to the outside, and is electrically connected to the end current collector 17 on a negative electrode side in the cell stack 11B.

The connection terminal 19C electrically connects the end current collector 17 on a negative electrode side in the cell stack 11A and the end current collector 17 on a positive electrode side in the cell stack 11B.

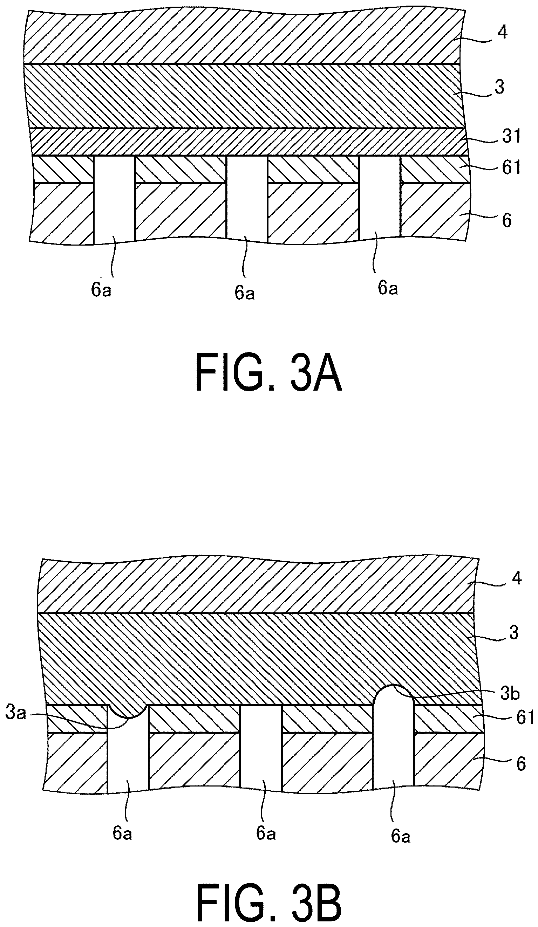

FIG. 3A is an enlarged cross-sectional view of a region A illustrated in FIG. 1A. As illustrated in FIG. 3A, a coating layer 61 is located on the surface on the fuel electrode 3 side of the first member 6. An adhesive 31 having electrical conductivity is located between the fuel electrode 3 and the first member 6 (coating layer 61), and adheres the fuel electrode 3 and the first member 6 (coating layer 61) to each other.

The coating layer 61 is a natural oxide film containing, for example, chromium oxide (Cr₂O₃). The coating layer 61 may also contain electrically conductive particles and titanium. The electrically conductive particles contain, for example, nickel. The adhesive 31 contains electrically conductive particles such as Ni, for example, and inorganic oxides such as TiO₂ and Y₂O₃. The adhesive 31 has gas permeability and electrical conductivity.

In the example illustrated in FIG. 3A, the adhesive 31 is located between the fuel electrode 3 and the first member 6 (coating layer 61). However, the adhesive 31 need not be located therebetween.

FIG. 3B is a cross-sectional view illustrating another example of the region A illustrated in FIG. 1A. As illustrated in FIG. 3B, the fuel electrode 3 and the first member 6 (coating layer 61) may face each other with no adhesive interposed therebetween. The fuel electrode 3 facing the openings 6a and serving as the first electrode may be located protruding into the openings 6a (e.g., the state 3a). Since the fuel electrode 3 protrudes into the openings 6a, for example, even when no adhesive is interposed therebetween, the bonding strength between the fuel electrode 3 and the first member 6 (coating layer 61) is improved, and thus the cell 1 has improved durability.

Note that the fuel electrode 3 may be located spaced apart from the openings 6a (e.g., the state 3b). The adhesive 31 may be located between the fuel electrode 3 and the first member 6 (coating layer 61) (see FIG. 3A), and the adhesive 31 may be located inside the openings 6a.

### Variations of Cell

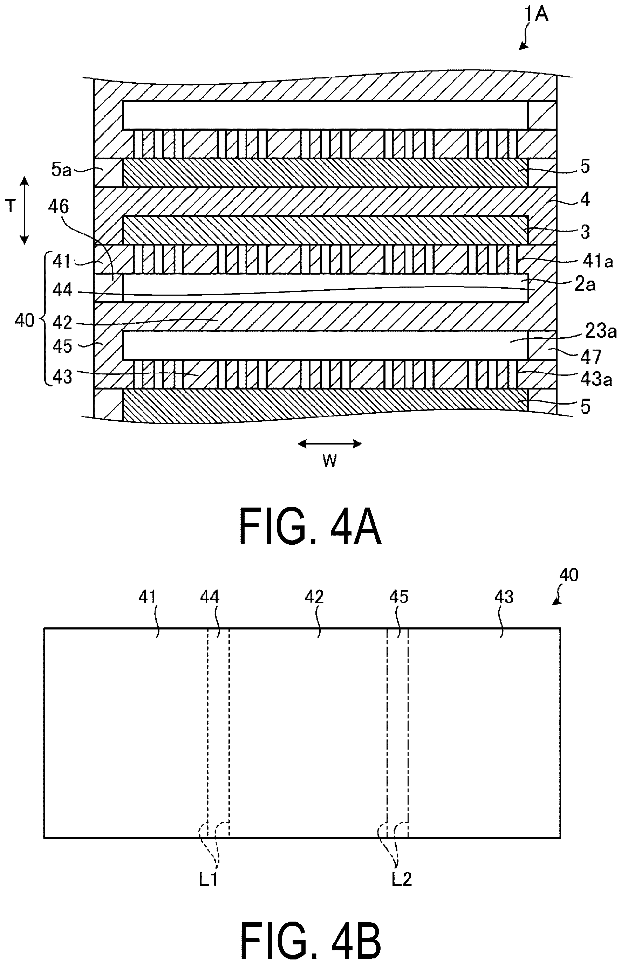

FIG. 4A is a cross-sectional view illustrating an example of a cell according to a first variation of the embodiment. As illustrated in FIG. 4A, a cell 1A includes a structure 40 made of metal located between element portions that are adjacent in the thickness direction T. The structure 40 includes a first support portion 41, a partition portion 42, a second support portion 43, and connecting portions 44 and 45. The structure 40 is an example of the metal material.

One surface of the first support portion 41 supports the fuel electrode 3 of the element portion, and the other surface on the opposite side to that of the one surface of the first support portion 41 faces the first gas-flow passage 2a. The first support portion 41 also includes openings 41a that penetrate from the one surface to the other surface. The first gas-flow passages 2a and the fuel electrode 3 are in communication with each other through the openings 41a. The first support portion 41 is an example of the first metal portion.

One surface of the partition portion 42 faces the first gas-flow passage 2a, and the other surface on the opposite side to that of the one surface of the partition portion 42 faces the second gas-flow passage 23a. The partition portion 42 is an example of the second metal portion.

One surface of the second support portion 43 supports the air electrode 5 of the element portion included in an adjacent cell 1A, and the other surface on the opposite side to that of the one surface of the second support portion 43 faces the second gas-flow passage 23a. The second support portion 43 includes openings 43a that penetrate from the one surface to the other surface. The second gas-flow passage 23a and the air electrode 5 are in communication with each other through the openings 43a. The second support portion 43 is an example of a fourth metal portion.

The connecting portion 44 connects the first support portion 41 and the partition portion 42. The connecting portion 44 is located on one end side in the width direction W, and connects the first support portion 41 and the partition portion 42. A spacer 46 is located on the other end side in the width direction W with the first gas-flow passage 2a interposed between the connecting portion 44 and the spacer 46. The spacer 46 ensures the airtightness of the first gas-flow passage 2a and the strength of the structure 40.

The connecting portion 45 connects the partition portion 42 and the second support portion 43. The connecting portion 45 is located on the other end side in the width direction W, and connects the partition portion 42 and the second support portion 43. A spacer 47 is located on the other end side in the width direction W with the second gas-flow passage 23a interposed between the connecting portion 45 and the spacer 47. The spacer 47 ensures the airtightness of the second gas-flow passage 23a and the strength of the structure 40.

Since the structure 40 is constituted by one continuous metal material in this manner, the electrical conductivity increases compared to a case in which a plurality of metal materials are stacked on each other. This reduces the internal resistance of the cell 1A, and thus improves the battery performance. Since the number of parts is reduced, the bonding or adhering points between members are reduced. This makes it relatively easy to ensure the airtightness of the first gas-flow passage 2a, for example, and the cell 1A can have enhanced durability.

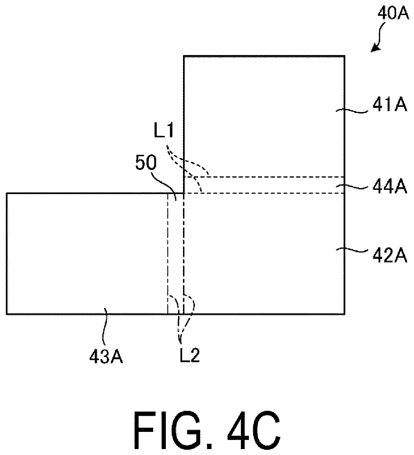

A manufacturing example of the structure 40 will be described using FIGs. 4B and 4C. FIG. 4B is a developed view illustrating an example of the structure 40 according to the embodiment. FIG. 4C is a developed view illustrating another example of the structure 40 according to the embodiment. Note that in FIGs. 4B and 4C, illustration of the openings 41a and 43a is omitted.

As illustrated in FIG. 4B, the structure 40 can be manufactured by bending a rectangular plate-shaped member made of a metal material. Specifically, the structure 40 illustrated in FIG. 4A can be manufactured, for example, by making a mountain fold at the line L1 and making a valley fold at the line L2.

As illustrated in FIG. 4C, a structure 40A similar to the structure 40 may be manufactured by bending a rectangular plate-shaped member made of a metal material. In the example illustrated in FIG. 4C, the structure 40A including a first support portion 41A, a partition portion 42A, a second support portion 43A, a connecting portion 44A, and a connecting portion 50 can be obtained by making a mountain fold at the line L1 and making a valley fold at the line L2. The first support portion 41A, the partition portion 42A, the second support portion 43A, and the connecting portion 44A correspond to the first support portion 41, the partition portion 42, the second support portion 43, and the connecting portion 44 illustrated in FIG. 4B, respectively. The configuration corresponding to the connecting portion 45 may be constituted by a spacer or the like, for example.

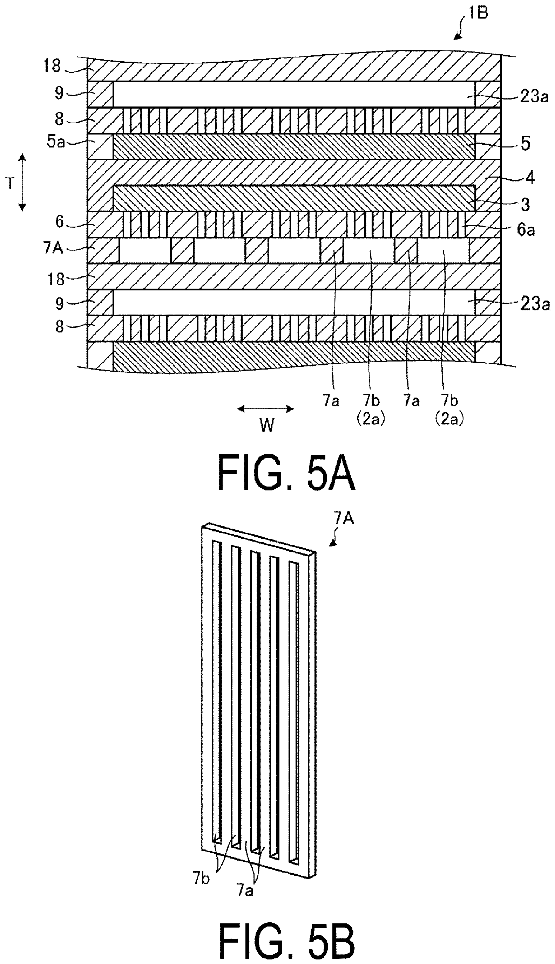

FIG. 5A is a cross-sectional view illustrating an example of a cell according to a second variation of the embodiment. FIG. 5B is a perspective view illustrating an example of a first channel plate according to a variation.

As illustrated in FIG. 5A, a cell 1B has the same configuration as that of the cell 1 according to the embodiment except that the cell 1B includes a first channel plate 7A instead of the first channel plate 7.

As illustrated in FIG. 5B, the first channel plate 7A includes reinforcing portions 7a and opening portions 7b. The opening portions 7b penetrate the first channel plate 7A in the thickness direction T (see FIG. 5A) and extend in the length direction L (see FIG. 5A). The opening portions 7b are located in plurality and side by side in the width direction W of the first channel plate 7A. The reinforcing portions 7a are portions sandwiched between adjacent opening portions 7b. The reinforcing portions 7a are an example of the third metal portion.

One surface of each of the reinforcing portions 7a of the first channel plate 7A faces the first member 6, and the other surface on the opposite side to that of the one surface of each of the reinforcing portions 7a of the first channel plate 7A faces the partition member 18. On the other hand, the opening portions 7b of the first channel plate 7A are the first gas-flow passage 2a through which the fuel gas flows.

Since the first channel plate 7A is located instead of the first channel plate 7, deformation of the metal members such as, for example, bending of the first member 6 and/or the partition member 18 can be suppressed. Accordingly, the metal members have enhanced durability, and thus the cell 1B can have enhanced durability.

The reinforcing portions 7a impart pressure loss to the fuel gas flowing through the opening portions 7b (the first gas-flow passage 2a). Accordingly, the fuel gas flowing through the opening portions 7b (the first gas-flow passage 2a) is easily supplied to the fuel electrode 3 via the openings 6a side. This improves the power generation performance of the cell 1B.

Note that the reinforcing portions 7a may be located as separate members, for example. Alternatively, the reinforcing portions 7a may be located as members integrated with another member located around the first gas-flow passage 2a such as, for example, the partition member 18. Although not illustrated, reinforcing portions may be located inside the second gas-flow passage 23a.

### Variations of Reinforcing Portions

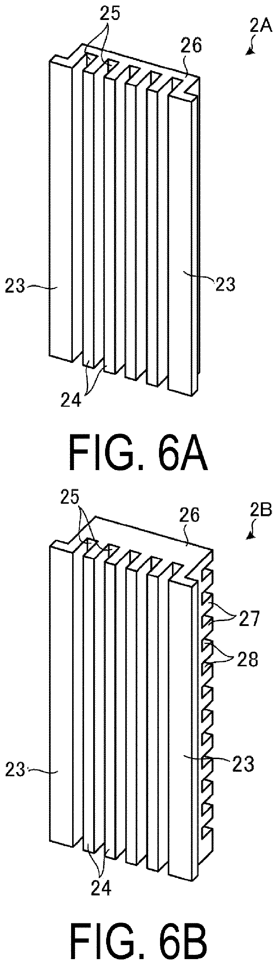

In the examples described above, an example has been described in which the first channel plate 7A includes the reinforcing portions 7a. However, the present disclosure is not limited thereto. FIGs. 6A to 6D are perspective views illustrating examples of a reinforcing member.

As illustrated in FIG. 6A, a reinforcing member 2A includes outer edges 23, reinforcing portions 24, channel portions 25, and a rear surface portion 26.

The outer edges 23 and the reinforcing portions 24 are portions that abut on the first member 6. The channel portions 25 correspond to the first gas-flow passage 2a (see FIG. 1A) located between the reinforcing member 2A and the first member 6. The second channel plate 9 is located at the rear surface portion 26. That is, the reinforcing member 2A can be used in place of, for example, the first channel plate 7A and the partition member 18 illustrated in FIG. 5A.

As illustrated in FIG. 6B, a reinforcing member 2B differs from the reinforcing member 2A in that protruding portions 27 and recessed portions 28 are located at the rear surface portion 26. The recessed portions 28 located at the rear surface portion 26 can be utilized as gas-flow passages (the second gas-flow passage 23a) through which the oxygen-containing gas flows. The protruding portions 27 can be utilized as reinforcing portions that suppress bending and/or deformation of the second member 8.

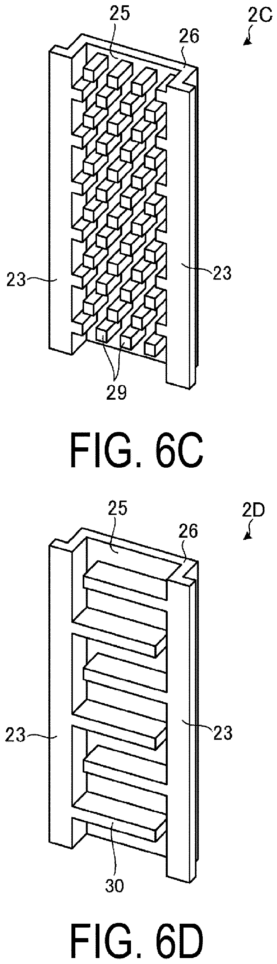

As illustrated in FIG. 6C, a reinforcing member 2C differs from the reinforcing member 2A in that the reinforcing member 2C includes a plurality of reinforcing portions 29 protruding from the channel portion 25 instead of the reinforcing portions 24 extending in the length direction. Even when such a reinforcing member 2C is used, the metal members including the first member 6 can have improved durability. Accordingly, the cell 1B including such a reinforcing member 2C has improved durability.

The reinforcing member 2C including the reinforcing portions 29 imparts greater pressure loss to the fuel gas flowing through the channel portion 25 compared to the reinforcing member 2A including the reinforcing portions 24. Accordingly, the fuel gas flowing through the channel portion 25 is easily supplied to the fuel electrode 3 via the openings 6a side of the first member 6. This improves the power generation performance of the cell 1B.

As illustrated in FIG. 6D, a reinforcing member 2D including reinforcing portions 30 extending in the width direction intersecting the length direction through which the fuel gas flows may be positioned in the cell 1B. Since the reinforcing portions 30 extend so as to intersect the direction in which the fuel gas flows, the pressure loss imparted to the fuel gas flowing through the channel portion 25 is greater compared to a case in which reinforcing portions 24 extending along the direction in which the fuel gas flows are included. Accordingly, the fuel gas flowing through the channel portion 25 is easily supplied to the fuel electrode 3 via the openings 6a side of the first member 6. This improves the power generation performance of the cell 1B. Note that the length direction in which the fuel gas flows is the first direction, that is, the direction directed from the inlet toward the outlet of the first gas-flow passage 2a. The width direction is a second direction, that is, the direction intersecting the first direction.

### Module

A module 100 according to an embodiment of the present disclosure that uses the aforementioned cell stack device 10 will be described with reference to FIG. 7. FIG. 7 is an exterior perspective view illustrating a module according to the embodiment. FIG. 7 illustrates a state in which a front surface and a rear surface, which are part of a housing container 101, are removed and the cell stack device 10, which is a fuel cell housed inside, is pulled out to the rear.

As illustrated in FIG. 7, the module 100 includes the housing container 101, and the cell stack device 10 housed in the housing container 101. Also, the reformer 102 is disposed above the cell stack device 10.

The reformer 102 generates a fuel gas by reforming a raw fuel such as natural gas and kerosene, and supplies the fuel gas to the cell 1. The raw fuel is supplied to the reformer 102 through the raw fuel supply pipe 103. The reformer 102 may include a vaporizing unit 102a for vaporizing water and a reforming unit 102b. The reforming unit 102b includes a reforming catalyst (not illustrated) for reforming the raw fuel into a fuel gas. Such a reformer 102 can perform steam reforming, which is a highly efficient reforming reaction.

Then, the fuel gas produced by the reformer 102 is supplied to the first gas-flow passage 2a (see FIG. 1A) of the cell 1 through the gas circulation pipe 20, the gas tank 16, and the support member 14.

Also, in the module 100 having the configuration mentioned above, the temperature in the module 100 during normal power generation is about 500°C to 1000°C due to combustion of gas and power generation by the cell 1.

As described above, such a module 100 houses the cell stack device 10 including a plurality of cells 1 having high durability, and thus the module 100 can have enhanced durability.

### Module Housing Device

FIG. 8 is an exploded perspective view illustrating an example of a module housing device according to an embodiment. A module housing device 110 according to the embodiment includes an external case 111, the module 100 illustrated in FIG. 7, and an auxiliary device (not illustrated). The auxiliary device operates the module 100. The module 100 and the auxiliary device are contained within the external case 111. Note that in FIG. 8, a portion of the configuration is omitted.

The external case 111 of the module housing device 110 illustrated in FIG. 8 includes columns 112 and external plates 113. A dividing plate 114 vertically partitions the interior of the external case 111. The space above the dividing plate 114 in the external case 111 is a module housing room 115 that houses the module 100. The space below the dividing plate 114 in the external case 111 is an auxiliary device housing room 116 that houses the auxiliary device that operates the module 100. Note that in FIG. 8, the auxiliary device housed in the auxiliary device housing room 116 is omitted.

The dividing plate 114 includes an air circulation hole 117 for causing air in the auxiliary device housing room 116 to flow into the module housing room 115 side. The external plates 113 constituting the module housing room 115 includes an exhaust hole 118 for discharging air inside the module housing room 115.

As described above, such a module housing device 110 includes the module 100 having high durability in the module housing room 115, and thus the module housing device 110 can have enhanced durability.

Note that although description with illustration is omitted, a module 100 and a module housing device 110 that use the cell 1A illustrated in FIG. 4A as well as a module 100 and a module housing device 110 that use the cell 1B illustrated in FIG. 5A can also be constituted like the module 100 and the module housing device 110 illustrated in FIGs. 7 and 8, respectively.

### Other Variations

A cell according to other variations of the embodiment will be described.

In FIG. 4A, the cell 1A that uses the structure 40 in which the first support portion 41, the partition portion 42, the second support portion 43, and the connecting portions 44 and 45 are integrated has been described. However, a cell may be manufactured using a portion of such a structure 40. For example, the first support portion 41, the partition portion 42, and the connecting portion 44 may be integrated, and a current collection member may be positioned at the rear surface of the partition portion 42 instead of the second support portion 43 and the connecting portion 45.

Further, in the aforementioned embodiment, the "cell", the "cell stack device", the "module", and the "module housing device" are exemplified by the fuel cell, a fuel cell stack device, a fuel cell module, and a fuel cell device, respectively, but they may also be exemplified by an electrolytic cell, an electrolytic cell stack device, an electrolytic module, and an electrolytic device, respectively.

While the present disclosure has been described in detail, the present disclosure is not limited to the aforementioned embodiment, and various changes, improvements, and the like can be made without departing from the gist of the present disclosure.

As described above, the cell 1 according to the embodiment includes the element portion and a metal member. The metal member includes the first gas-flow passage 2a and the second gas-flow passage 23a, and supports the element portion. First gas flows through the first gas-flow passage 2a. Second gas flows through the second gas-flow passage 23a. This can enhance the durability of the cell 1.

Also, the cell stack device 10 according to the embodiment includes the cell stack 11 including the plurality of cells 1 mentioned above. This can enhance the durability of the cell stack device 10.

Further, the module 100 according to the embodiment includes the cell stack device 10 described above, and the housing container 101 that houses the cell stack device 10. This can enhance the durability of the module 100.

Further, the module housing device 110 according to the embodiment includes the module 100 described above, the auxiliary device for operating the module 100, and the external case that houses the module 100 and the auxiliary device. This can enhance the durability of the module housing device 110.

Noted that the embodiment disclosed herein is exemplary in all respects and not restrictive. Indeed, the aforementioned embodiment can be embodied in a variety of forms. Furthermore, the aforementioned embodiment may be omitted, replaced, or changed in various forms without departing from the scope of the appended claims and the purpose thereof.

### REFERENCE SIGNS

1 Cell
10 Cell stack device
11 Cell stack
12 Fixing member
13 Bonding material
14 Support member
15 Support body
16 Gas tank
17 End current collector
18 Partition member
100 Module
110 Module housing device

## Claims

1. A cell comprising:
an element portion; and
a metal member comprising
a first gas-flow passage through which first gas flows, and
a second gas-flow passage through which second gas flows, the second gas-flow passage supporting the element portion.

2. The cell according to claim 1, wherein
the metal member comprises:
a first metal portion
located between the first gas-flow passage and the element portion, and
configured to transmit the first gas between the first gas-flow passage and the element portion; and
a second metal portion
located between the first gas-flow passage and the second gas-flow passage, and
configured to transmit neither the first gas nor the second gas.

3. The cell according to claim 2, wherein the first metal portion and the second metal portion are constituted by a continuous metal material.

4. The cell according to claim 2 or 3, further comprising:
a fourth metal portion located opposite to the second metal portion with the second gas-flow passage interposed between the fourth metal portion and the second metal portion, wherein
the first metal portion, the second metal portion, and the fourth metal portion are constituted by a continuous metal material.

5. The cell according to any one of claims 2 to 4, further comprising:
a fourth metal portion located opposite to the second metal portion with the second gas-flow passage interposed between the fourth metal portion and the second metal portion; and
a coating layer located between the fourth metal portion and an oxidizing atmosphere, the coating layer containing at least any one of zinc, manganese, and cobalt.

6. The cell according to any one of claims 2 to 5, wherein the first metal portion comprises an opening through which the element portion and the first gas-flow passage are in communication with each other.

7. The cell according to claim 6, wherein a first electrode of the element portion facing the opening protrudes into the opening or is spaced apart from the opening.

8. The cell according to any one of claims 1 to 7, wherein the metal member comprises a reinforcing portion located inside the first gas-flow passage.

9. The cell according to any one of claims 2 to 7, wherein the metal member comprises a reinforcing portion being located inside the first gas-flow passage and facing the first metal portion and the second metal portion.

10. The cell according to claim 9, wherein
the metal member comprises a third metal portion located between the first metal portion and the second metal portion, and
the third metal portion includes the reinforcing portion.

11. The cell according to any one of claims 8 to 10, wherein
the first gas-flow passage comprises an inlet and an outlet for the first gas, and
the reinforcing portion extends in a second direction intersecting a first direction directed from the inlet toward the outlet.

12. A cell stack device comprising the cell according to any one of claims 1 to 11 in plurality.

13. A module comprising:
the cell stack device according to claim 12; and
a housing container housing the cell stack device.

14. A module housing device comprising:
the module according to claim 13;
an auxiliary device configured to operate the module; and
an external case housing the module and the auxiliary device.
